# EUROPÄISCHE PATENTSCHRIFT

(11) **EP 3 316 401 B1**
(45) Veröffentlichungstag und Bekanntmachung des Hinweises auf die Patenterteilung: **24.10.2018**
(21) Anmeldenummer: 16195571.1
(22) Anmeldetag: 25.10.2016
(51) Int. Cl.: G05B 9/02, G06F 1/14, G06F 13/42, G06F 9/445, G05B 19/042, H01R 9/26

(54) **STEUERUNG ZUM SICHEREN STEUERN ZUMINDEST EINER MASCHINE**
CONTROLS FOR SECURE CONTROLLING OF AT LEAST ONE MACHINE
COMMANDE SÉCURISÉE D'AU MOINS UNE MACHINE

(43) Veröffentlichungstag der Anmeldung: 02.05.2018
(73) Patentinhaber: SICK AG, 79183 Waldkirch (DE)
(72) Erfinder: Saumer, Markus, 77948 Friesenheim (DE)

(56) Entgegenhaltungen:
- EP-A1- 1 338 935

## Beschreibung

Die Erfindung betrifft eine Steuerung zum sicheren Steuern zumindest einer Maschine gemäß dem Oberbegriff des Anspruchs 1.

In der heutigen Automatisierungsindustrie wird eine Gesamtanlage aus einer Vielzahl von Modulen erstellt, wobei jedes Modul zumindest eine Steuerung und zumindest eine Maschine aufweist. Durch den modularen Aufbau der Anlage kann eine Änderung der Anlage einfach und zeitsparend durchgeführt werden.

Die Steuerung der Anlage steuert derart die Maschine, dass die Maschine ihre zugeordnete Aufgabe durchführt und gegebenenfalls mit einer anderen Maschine interagiert. Hierzu erhält die Steuerung Eingangssignale von angeschlossenen Signalgebern, die beispielsweise eine Umgebung der Maschine oder eine Position oder eine Bewegung der Maschine wiedergeben. Die Steuerung erzeugt Ausgangssignale, die die Maschine entsprechend ansteuert, und kommuniziert die Ausgangssignale an die Maschine.

Hierbei umfasst die Steuerung Konfigurationsdaten, die der Steuerung ermöglichen, die angeschlossenen Signalgeber und Maschine zu erkennen und diese in ihrer Funktion zu steuern. Diese Konfigurationsdaten können mittels eines externen Eingabegeräts, beispielsweise eines Computers, in die Steuerung implementiert werden.

In bekannter Weise sind die Konfigurationsdaten in der Steuerung gespeichert, so dass bei einem Wechseln der Steuerung eine neue Implementierung der Konfigurationsdaten in die neue Steuerung notwendig ist, wobei das Eingabegerät an die Steuerung angeschlossen werden muss. Auch bei einer Modifikation der Anlage oder der durchzuführenden Aufgabe durch die Maschine muss das Eingabegerät an die Steuerung angeschlossen werden, um die Modifikation auf die Steuerung aufzuspielen.

Dies erfordert eine Eingabe der Konfigurationsdaten in die Steuerung vor Ort oder eine längere Standzeit der Anlage, bis die mit den neuen Konfigurationsdaten konfigurierte Steuerung in die Anlage wieder eingebaut ist.

Aus EP 1 338 935 A1 ist eine Steuerung gemäß dem Oberbegriff des Anspruchs 1 bekannt.

Es ist daher eine Aufgabe der Erfindung, eine Steuerung zum sicheren Steuern einer Maschine der eingangsgenannten Art derart zu verbessern, dass eine schnelle Konfiguration der Steuerung möglich ist.

Die Aufgabe wird erfindungsgemäß gelöst durch eine Steuerung zum sicheren Steuern zumindest einer Maschine mit den Merkmalen des Anspruchs 1.

Vorteilhafterweise kann, im Falle eines Wechselns der Steuerung, eine neue Steuerung mit den Konfigurationsdaten im Speicher der Anschlussbuchse der gewechselten Steuerung schnell und preisgünstig in Betrieb genommen werden, ohne dass ein externes Eingabegerät angeschlossen werden muss bzw. eine neue Konfiguration der neuen Steuerung durchgeführt werden muss. Hierzu muss die Anschlussbuchse lediglich von der zu wechselnden Steuerung entfernt und in die neue Steuerung eingesetzt werden.

Zusätzlich sind sämtliche Verdrahtungen in der Anschlusseinheit vorgesehen, so dass sowohl die Anschlusseinheit als auch die Steuerung kostengünstig hergestellt werden können.

Gemäß einem weiteren bevorzugten Ausführungsbeispiel umfasst die Anschlussbuchse einen Universal Serial Bus-(USB)-Anschluss, einen Micro-USB-Anschluss, einen Mini-USB-Anschluss oder vergleichbare Anschlüsse. Diese Standardanschlüsse bieten vorteilhafterweise eine generelle Anschlussmöglichkeit von verschiedenartigsten Eingabegeräten an die Steuerung und eine preisgünstige Herstellung der Anschlusseinheit und der gesamten Steuerung.

Gemäß einem weiteren bevorzugten Ausführungsbeispiel umfasst die Anschlussbuchse eine Platine, auf der der Speicher vorgesehen ist. Hierdurch ist es möglich, die Anschlussbuchse mit dem Speicher kompakt zu gestalten.

Gemäß einem bevorzugten Ausführungsbeispiel stellt die Anschlusseinheit im angeschlossenen Zustand in der Sicherheitssteuerung eine erste und eine zweite Verbindung zwischen der Anschlussbuchse und der Steuereinheit bereit. Vorteilhafterweise stellt die erste Verbindung eine Verbindung zwischen der Anschlussbuchse, der Steuereinheit und dem Speicher als Serielles-Port-Interface-(SPI)-Verbindung bereit. Insbesondere stellt die zweite Verbindung eine direkte USB-Verbindung zwischen der Anschlussbuchse und der Steuereinheit bereit. Hierdurch ergibt sich der Vorteil, dass zwei diversitäre Verbindungen innerhalb der Anschlussbuchse für die Steuerung vorhanden sind, die unterschiedliche Kommunikationsprotokolle verwenden.

Gemäß einem weiteren bevorzugten Ausführungsbeispiel umfasst der Speicher einen nichtflüchtigen Speicher, so dass die implementierten Konfigurationsdaten der Steuerung trotz einer Entnahme der Anschlussbuchse aus der Anschlusseinheit bzw. der Steuerung erhalten bleibt.

Vorteilhafterweise umfasst die Anschlussbuchse eine Echtzeituhr. Hierdurch wird eine Echtzeitinfo trotz beispielsweise eines Tausches der Steuerung für die Gesamtanlage erhalten.

Gemäß einem weiteren bevorzugten Ausführungsbeispiel umfasst die Anschlusseinheit eine eigene Spannungsversorgung. Vorzugsweise versorgt die Spannungsversorgung die Echtzeituhr mit Strom, wenn die Anschlusseinheit von der Steuerung getrennt ist.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen Steuerung in einer Automatisierungsanlage,
- Fig. 2: eine schematische Darstellung eines Ausführungsbeispiels der erfindungsgemäßen Steuerung, und
- Fig. 3: eine schematische Detaildarstellung einer erfindungsgemäßen Anschlussbuchse.

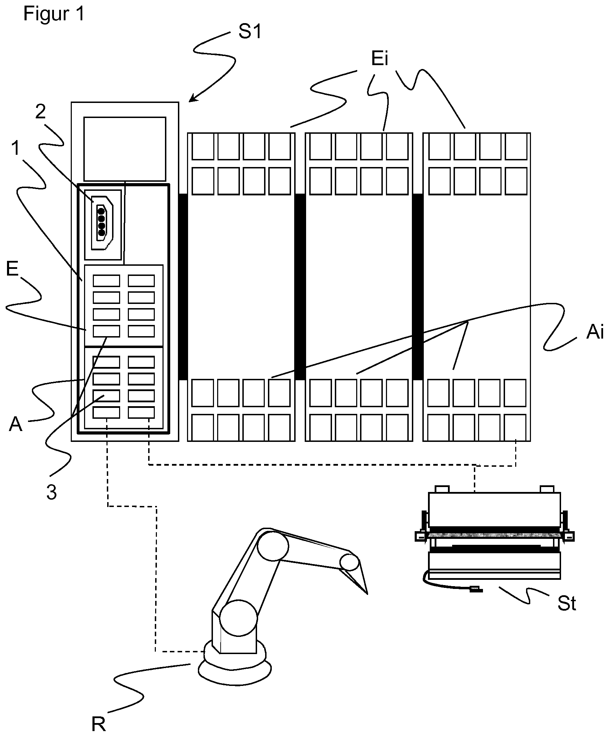

Die Figur 1 zeigt schematisch eine Automatisierungsanlage, die aus einer erfindungsgemäßen Steuerung S1 und aus zwei von der Steuerung S1 angesteuerten Maschinen aufgebaut ist. Die Steuerung S1 steuert die, beispielhaft als Roboterarm R und als Stanze St dargestellten, Maschinen an.

Die Steuerung S1 umfasst zumindest eine Eingangseinheit E, an die zumindest ein nicht dargestellter Signalgeber angeschlossen ist, so dass die Eingangseinheit E Eingangssignale von dem Signalgeber empfängt und einer, im Folgenden noch näher beschriebenen, Steuereinheit CPU der Steuerung S1 zur Verfügung stellt. Die Eingangssignale werden von der Steuereinheit CPU in entsprechende Ausgangssignale verarbeitet, mit denen die Steuerung S1 die Maschinen R und St sicher steuert. Hierzu kommuniziert die Steuereinheit CPU die Ausgangssignale an zumindest eine Ausgangseinheit A, die die Ausgangssignale an die Maschinen R und St direkt ausgibt.

Die Steuerung S1 kann mit zusätzlichen Eingangs- und Ausgangseinheiten Ei und Ai erweitert werden, so dass die Gesamtanlage auf einfachste Art und Weise erweitert werden kann. Hierzu sind die zusätzlichen Eingangs- und Ausgangseinheiten Ei und Ai mittels einer Busleitung mit der erfindungsgemäßen Steuerung S1 verbunden.

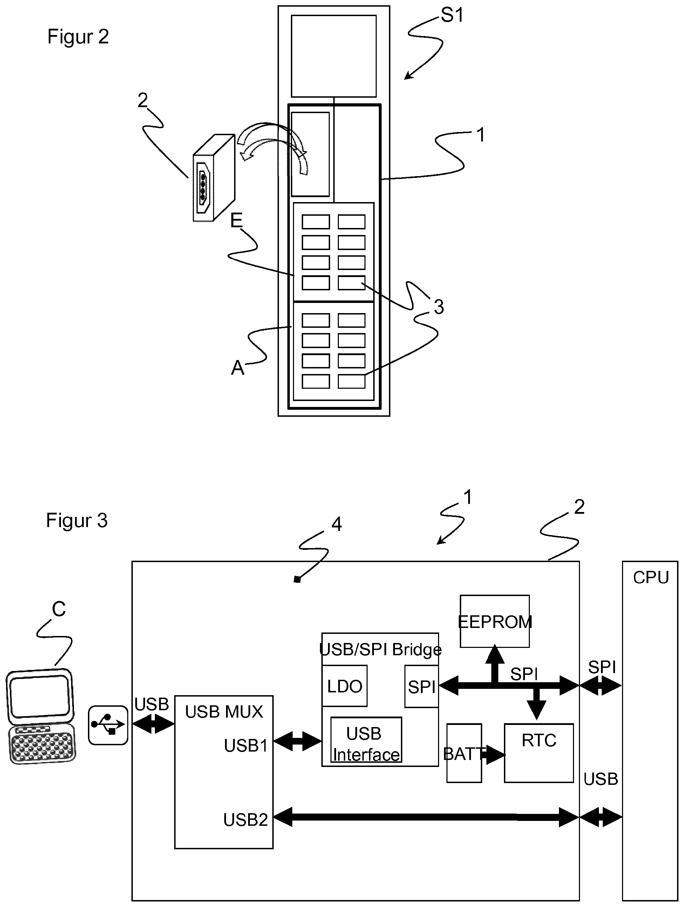

Weiterhin umfasst die Steuerung S1 eine Anschlusseinheit 1, die mindestens eine Anschlussbuchse 2 aufweist. Die Anschlussbuchse 2 dient zum Anschließen eines externen Eingabegeräts C, wie beispielsweise ein Computer bzw. Laptop und wie in der Figur 3 dargestellt. Mittels des externen Eingabegeräts C können Konfigurationsdaten der Gesamtanlage, insbesondere die Zuweisung der Anschlüsse der Steuerung S1 zu den angeschlossenen Signalgebern und Maschinen R und St sowie die Betriebsdaten der Komponenten in die Steuerung S1 implementiert werden, so dass die Steuerung S1 die angeschlossenen Komponenten erkennen und steuern kann. Hierbei weist die Anschlusseinheit 1 vorzugsweise mindestens eine Anschlussklemme 3 auf, an die der Signalgeber und/oder die Maschine R und St angeschlossen werden können.

Die Anschlussbuchse 2 ist erfindungsgemäß von der Anschlusseinheit 1 bzw. von der Steuerung S1 herausnehmbar und umfasst einen vorzugsweise nichtflüchtigen Speicher EEPROM, der im Folgenden noch näher beschrieben wird, in dem die Konfigurationsdaten der Steuerung S1 abgespeichert sind. Das heißt, die mittels des externen Eingabegeräts C eingegebenen Konfigurationsdaten der Steuerung S1 sind in dem nichtflüchtigen Speicher EEPROM hinterlegt, wobei der nichtflüchtige Speicher EEPROM in die Anschlussbuchse 2 integriert ist.

Bei einem Wechsel der Steuerung S1 ist die Anschlusseinheit 1 zusammen mit der Anschlussbuchse 2 oder nur die Anschlussbuchse 2 von der Steuerung S1 abtrennbar und in die neue Steuerung S1 oder in die neue Anschlusseinheit 1 der neuen Steuerung S1 einsetzbar, so dass die neue Steuerung S1 alle Konfigurationsdaten aus dem nichtflüchtigen Speicher EEPROM der Anschlussbuchse 2 übernehmen und in Betrieb gehen kann, ohne dass das externe Eingabegerät C an die neue Steuerung S1 angeschlossen und die Konfigurationsdaten neu eingegeben werden müssen.

Ferner ist es erfindungsgemäß möglich, bei beispielsweise einer Modifikation der Gesamtanlage, insbesondere der Steuerung S1, die Anschlussbuchse 2 ohne Anschlusseinheit 1 oder Steuerung S1 an das externe Eingabegerät C anzuschließen und die neuen Konfigurationsdaten direkt in dem nichtflüchtigen Speicher EEPROM der Anschlussbuchse 2 zu implementieren, so dass die Modifikation nicht vor Ort an der Gesamtanlage durchgeführt werden muss. Nach der Implementierung der Modifikationsdaten in dem nichtflüchtigen Speicher EEPROM der Anschlussbuchse 2 ist lediglich ein Einsetzen der Anschlussbuchse 2 in die Anschlusseinheit 1 bzw. in die Steuerung S1 notwendig, damit die Steuerung S1 die Konfigurationsdaten übernehmen und in Betrieb gehen kann.

In der Figur 2 wird schematisch ein Hinzufügen bzw. ein Entfernen der Anschlussbuchse 2 in die erfindungsgemäße Steuerung S1 bzw. aus derselben dargestellt. Die Anschlussbuchse 2 umfasst vorzugsweise einen sogenannten Universal Serial Bus (USB) Anschluss, einen Micro-USB-Anschluss, einen Mini-USB-Anschluss oder vergleichbare Anschlüsse. Hierdurch kann die Anschlussbuchse 2 mittels standardisierter USB-Anschlüsse an das externe Eingabegerät C angeschlossen werden und mittels standardisierter Übertragungsprotokolle mit dem externen Eingabegerät C kommunizieren.

Wie in der schematischen Detaildarstellung der Anschlussbuchse 2 in Figur 3 dargestellt, umfasst die Anschlussbuchse 2 eine Platine 4, auf der der nichtflüchtige Speicher EEPROM vorgesehen ist. Wie bereits erwähnt, sind die Konfigurationsdaten der Steuerung S1 in dem nichtflüchtigen Speicher, der beispielsweise ein EEPROM-Speicher ist, abgespeichert. Die Platine 4 weist auf einer Seite den USB-Anschluss, der zum Anschließen der Anschlussbuchse 2 an dem externen Eingabegerät C dient, und auf der anderen Seite Anschlüsse zu einer Steuereinheit CPU der Steuerung S1 auf.

Der USB-Anschluss wird mittels eines Multiplexer-Bausteins (USB MUX) in einem ersten Kommunikationspfad USB1 und einem zweiten Kommunikationspfad USB2 verzweigt. Im angeschlossenen Zustand in der Steuerung S1, d.h. die Anschlussbuchse 2 ist in die Steuerung S1 eingesetzt, stellt die Anschlusseinheit 1 bzw. die Anschlussbuchse 2 eine erste und eine zweite Verbindung zwischen der Anschlussbuchse 2 und der Steuereinheit CPU der Steuerung S1 bereit. Hierbei stellt die erste Verbindung zwischen der Anschlussbuchse 2, der Steuereinheit CPU und dem nichtflüchtigen Speicher EEPROM als Serielles-Port-Interface Verbindung, sogenannte SPI-Verbindung, bereit. Die zweite Verbindung stellt eine direkte USB-Verbindung zwischen der Anschlussbuchse 2 und der Steuereinheit CPU der Steuerung S1 bereit.

Dadurch weist die Platine 4 der Anschlussbuchse 2 zwei diversitäre Kommunikationspfade auf, um das externe Eingabegerät C mit der Steuereinheit CPU der Steuerung S1 zu verbinden. Über dem ersten Kommunikationspfad USB1 bzw. der ersten SPI-Verbindung kann das externe Eingabegerät C die Konfigurationsdaten in dem nichtflüchtigen Speicher EEPROM der Anschlussbuchse 2 einspielen, von wo die Steuereinheit CPU der Steuerung S1 die Konfigurationsdaten bezieht. Über dem zweiten Kommunikationspfad USB2 kann das externe Eingabegerät C die Konfigurationsdaten parallel und direkt in die Steuereinheit CPU der Steuerung S1 einspielen.

Weiterhin umfasst die Anschlussbuchse 2 insbesondere eine Echtzeituhr RTC, die durch eine auf der Platine 4 der Anschlussbuchse 2 vorgesehene Spannungsversorgung BATT mit Strom versorgt wird. Hierdurch ist eine Energieversorgung der Echtzeituhr RTC gewährleistet, wenn die Anschlussbuchse 2 von der Anschlusseinheit 1 bzw. von der Steuerung S1 getrennt ist oder die Steuerung S1 nicht mit Energie versorgt ist.

Die Echtzeituhr RTC kann über den ersten Kommunikationspfad USB1 direkt von dem externen Eingabegerät C eingestellt werden und behält die Zeitinformation der Gesamtanlage bei, auch wenn die Steuerung S1 ausgewechselt ist.

Die Spannungsversorgung BATT umfasst vorzugsweise eine Batterie oder einen Akku, der beim Anschluss des externen Eingabegeräts C an dem USB-Anschluss der Anschlussbuchse 2 aufgeladen wird, so dass die in die Anschlussbuchse 2 integrierte Echtzeituhr RTC sicher mit Strom versorgt werden kann.

### Bezugszeichenliste

- 1: Anschlusseinheit
- 2: Anschlussbuchse
- 3: Anschlussklemme
- 4: Platine

- A, Ai: Ausgangseinheit
- BATT: Spannungsversorgung
- C: Externes Eingabegerät
- CPU: Steuereinheit
- E, Ei: Eingangseinheit
- EEPROM: Speicher
- R, St: Maschine (Roboterarm, Stanze)
- S1: Steuerung
- SPI: Serielles-Port-Interface
- USB: Universal Serial Bus-Anschluss
- USB1: Erster Kommunikationspfad
- USB2: Zweiter Kommunikationspfad

## Patentansprüche

1. Steuerung (S1) zum sicheren Steuern zumindest einer Maschine (R, St), mit zumindest einer Eingangseinheit (E, Ei) zum Empfangen von Eingangssignalen von zumindest einem Signalgeber,
zumindest einer Ausgangseinheit (A, Ai) zum Ausgeben von Ausgangssignalen an die zumindest eine Maschine (R, St),
einer Steuereinheit (CPU) zum Erzeugen der Ausgangssignale in Abhängigkeit von den Eingangssignalen, und
einer Anschlusseinheit (1) mit mindestens einer Anschlussklemme (3) zum Anschließen der Signalgeber und/oder der Maschine (R, St), wobei die Anschlusseinheit (1) von der Steuerung (S1) trennbar ist, **dadurch gekennzeichnet, dass**
die Anschlusseinheit (1) mindestens eine Anschlussbuchse (2) zum Anschließen eines externen Eingabegeräts (C) aufweist, das zum Konfigurieren der Steuerung (S1) verwendbar ist, wobei die Anschlussbuchse (2) in die Anschlusseinheit (1) herausnehmbar eingesetzt ist, und wobei die Anschlussbuchse (2) zusammen mit der Anschlusseinheit (1) von der Steuerung (S1) oder nur die Anschlussbuchse (2) von der Steuerung (S1) herausnehmbar ist und die Anschlussbuchse (2) einen Speicher (EEPROM) mit Konfigurationsdaten der Steuerung (S1) umfasst.

2. Steuerung (S1) nach Anspruch 1, **dadurch gekennzeichnet, dass** die Anschlussbuchse (2) einen Universal Serial Bus-(USB)-Anschluss, einen Micro-USB-Anschluss, einen Mini-USB-Anschluss oder vergleichbare Anschlüsse umfasst.

3. Steuerung (S1) nach Anspruch 1 oder 2, **dadurch gekennzeichnet, dass** die Anschlussbuchse (2) eine Platine (4) umfasst, auf der der Speicher (EEPROM) vorgesehen ist.

4. Steuerung (S1) nach einem der vorhergehenden Ansprüche 1 bis 3, **dadurch gekennzeichnet, dass** die Anschlusseinheit (1) im angeschlossenen Zustand in der Steuerung (S1) eine erste und eine zweite Verbindung zwischen der Anschlussbuchse (2) und der Steuereinheit (CPU) bereitstellt.

5. Steuerung (S1) nach Anspruch 4, **dadurch gekennzeichnet, dass** die erste Verbindung eine Verbindung zwischen der Anschlussbuchse (2), der Steuereinheit (CPU) und dem Speicher (EEPROM) als Serielles-Port-Interface-(SPI)-Verbindung bereitstellt.

6. Steuerung (S1) nach Anspruch 4 oder 5, **dadurch gekennzeichnet, dass** die zweite Verbindung eine direkte USB-Verbindung zwischen der Anschlussbuchse (2) und der Steuereinheit (CPU) bereitstellt.

7. Steuerung (S1) nach einem der vorhergehenden Ansprüche 1 bis 6, **dadurch gekennzeichnet, dass** der Speicher (EEPROM) einen nichtflüchtigen EEPROM-Speicher umfasst.

8. Steuerung (S1) nach einem der vorhergehenden Ansprüche 1 bis 7, **dadurch gekennzeichnet, dass** die Anschlussbuchse (2) eine Echtzeituhr (RTC) umfasst.

9. Steuerung (S1) nach einem der vorhergehenden Ansprüche 1 bis 8, **dadurch gekennzeichnet, dass** die Anschlusseinheit (1) eine eigene Spannungsversorgung (BATT) umfasst.

10. Steuerung (S1) nach Anspruch 9, **dadurch gekennzeichnet, dass** die Spannungsversorgung (BATT) die Echtzeituhr (RTC) mit Strom versorgt, wenn die Anschlusseinheit (1) von der Steuerung (S1) getrennt ist.

## Claims

1. Control (S1) for the safe control of at least one machine (R, St), having
at least one input unit (E, Ei) for receiving input signals from at least one signal transmitter,
at least one output unit (A, Ai) for outputting output signals to the at least one machine (R, St),
a control unit (CPU) for generating the output signals as a function of the input signals, and
a connection unit (1) with at least one connection terminal (3) for connecting the signal transmitters and/or the machine (R, St), the connection unit (1) being separable from the control (S1), **characterized in that**
the connection unit (1) has at least one connection socket (2) for connecting an external input device (C) which can be used to configure the controller (S1), the connection socket (2) being removably inserted into the connection unit (1), and wherein the connection socket (2) together with the connection unit (1) is removable from the controller (S1) or only the connection socket (2) from the controller (S1) and the connection socket (2) comprises a memory (EEPROM) with configuration data of the controller (S1).

2. Control (S1) according to claim 1, **characterized in that** the connection socket (2) comprises a Universal Serial Bus (USB) connection, a micro-USB connection, a mini USB connection or comparable connections.

3. Control (S1) according to claim 1 or 2, **characterized in that** the connection socket (2) comprises a board (4) on which the memory (EEPROM) is provided.

4. Control (S1) according to one of the preceding claims 1 to 3, **characterized in that**, the connection unit (1), in the connected state in the control (S1), provides a first and a second connection between the connection socket (2) and the control unit (CPU).

5. Control (S1) according to claim 4, **characterized in that** the first connection provides a connection between the connection socket (2), the control unit (CPU) and the memory (EEPROM) as a serial port interface (SPI) connection.

6. Control (S1) according to claim 4 or 5, **characterized in that** the second connection provides a direct USB connection between the connection socket (2) and the control unit (CPU).

7. Control (S1) according to one of the preceding claims 1 to 6, **characterized in that** the memory (EEPROM) comprises a non-volatile EEPROM memory.

8. Control (S1) according to one of the preceding claims 1 to 7, **characterized in that** the connection socket (2) comprises a real-time clock (RTC).

9. Control (S1) according to one of the preceding claims 1 to 8, **characterized in that** the connection unit (1) comprises its own power supply (BATT).

10. Control (S1) according to claim 9, **characterized in that** the power supply (BATT) supplies power to the real-time clock (RTC) when the connection unit (1) is separated from the control (S1).

## Revendications

1. Commande (S1) pour la commande sûre d'au moins une machine (R, St), comportant au moins une unité d'entrée (E, Ei) pour recevoir des signaux d'entrée d'au moins un émetteur de signaux,
au moins une unité de sortie (A, Ai) pour délivrer des signaux de sortie à au moins une machine (R, St),
une unité de commande (CPU) pour générer les signaux de sortie en fonction des signaux d'entrée, et
une unité de connexion (1) avec au moins une borne de connexion (3) pour connecter les émetteurs de signaux et/ou la machine (R, St), l'unité de connexion (1) étant séparable de la commande (S1), **caractérisée en ce que**
l'unité de connexion (1) comporte au moins une prise de connexion (2) pour connecter un dispositif d'entrée externe (C) qui peut être utilisé pour configurer le contrôleur (S1), la prise de connexion (2) étant insérée de manière amovible dans l'unité de connexion (1), et dans laquelle la prise de connexion (2) avec l'unité de connexion (1) peut être retirée du contrôleur (S1) ou seulement la prise de connexion (2) du contrôleur (S1) et la prise de connexion (2) comprend une mémoire (EEPROM) avec les données de configuration du contrôleur (S1).

2. Commande (S1) selon la revendication 1, **caractérisée en ce que** la prise de connexion (2) comprend une connexion au bus série universel (USB), une connexion micro-USB, une mini connexion USB ou des connexions comparables.

3. Commande (S1) selon la revendication 1 ou 2, **caractérisée en ce que** la prise de connexion (2) comprend une carte (4) sur laquelle la mémoire (EEPROM) est prévue.

4. Commande (S1) selon l'une des revendications 1 à 3 précédentes, **caractérisée en ce que** l'unité de connexion (1), à l'état connecté dans la commande (S1), assure une première et une seconde connexion entre la prise de connexion (2) et l'unité de commande (CPU).

5. Commande (S1) selon la revendication 4, **caractérisée en ce que** la première connexion prévoit une connexion entre la prise de connexion (2), l'unité de commande (CPU) et la mémoire (EEPROM) en tant qu'interface de port série (SPI).

6. Commande (S1) selon la revendication 4 ou 5, **caractérisée en ce que** la seconde connexion fournit une connexion USB directe entre la prise de connexion (2) et l'unité de commande (CPU).

7. Commande (S1) selon l'une des revendications 1 à 6 précédentes, **caractérisée en ce que** la mémoire (EEPROM) comprend une mémoire EEPROM non volatile.

8. Commande (S1) selon l'une des revendications 1 à 7 précédentes, **caractérisée en ce que** la prise de connexion (2) comprend une horloge en temps réel (RTC).

9. Commande (S1) selon l'une des revendications 1 à 8 précédentes, **caractérisée en ce que** l'unité de connexion (1) comprend sa propre alimentation (BATT).

10. Commande (S1) selon la revendication 9, **caractérisée en ce que** l'alimentation (BATT) alimente l'horloge en temps réel (RTC) lorsque l'unité de connexion (1) est séparée de la commande (S1).
